Europäisches Patentamt

European Patent Office

Office européen des brevets

(11) Veröffentlichungsnummer: **0 353 815**

**A2**

(12) ## EUROPÄISCHE PATENTANMELDUNG

(21) Anmeldenummer: 89201932.4

(22) Anmeldetag: 24.07.89

(51) Int. Cl.⁴: **G11B 15/44 , G11B 15/18 , G11B 15/29**

(30) Priorität: 30.07.88 DE 3826007

(43) Veröffentlichungstag der Anmeldung:
07.02.90 Patentblatt 90/06

(84) Benannte Vertragsstaaten:
DE FR GB IT

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Kunze, Norbert**
**Mozartstrasse 7**
**D-6332 Ehringshausen(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Magnetbandkassettengerät mit einem zum Abspielen von Magnetbandkassetten dienenden Laufwerk.**

(57) Die Erfindung bezieht sich auf ein Magnetband-kassettengerät (1) mit einem zum Abspielen von Magnetbandkassetten (2) dienenden Laufwerk, das zum Abspielen des Magnetbandes (29) mit wenigstens einer antreibbaren Tonwelle (30 oder 31) und einer gegen diese drückbaren Andruckrolle (35) versehen ist, wobei die Andruckrolle (35) und ein Magnetkopf (27), an denen das Magnetband (29) vorbeigeführt wird, an einer Kopfplatte (26) angeordnet sind, die in einer Ruhe- oder Schnellaufstellung zurückgezogen gehalten ist und die in die Spielstellung vorgefahren wird, wobei die an einer schwenkbaren Halterung (32) der Kopfplatte (26) gelagerte Andruckrolle (35) mit der Halterung gegen die Tonwelle (30 oder 31) verschwenkt wird. Dabei ist vorgesehen, daß an der Kopfplatte (26) im Wirkbereich der Andruckrollenhalterungen (32) Schalterelemente (39) angeordnet sind, die von der Andruckrollenhalterungen (32) bei ihrem Verschwenken infolge des An-druckens der Andruckrollen an die Tonwellen während des Laufwerksbetriebes in einen Schaltzustand versetzbar sind, in dem die Schaltelemente (39) an dem Magnetkopf (27) oder dem Vorverstärker des Laufwerkes (1) eine Stummschaltung und/oder eine Spurrichtungserkennung bewirken.

Fig.1

## Magnetbandkassettengerät mit einem zum Abspielen von Magnetbandkassetten dienenden Laufwerk

Die Erfindung bezieht sich auf ein Magnetbandkassettengerät mit einem zum Abspielen von Magnetbandkassetten dienenden Laufwerk, das zum Abspielen des Magnetbandes mit wenigestens einer antreibbaren Tonwelle und einer gegen diese drückbaren Andruckrolle versehen ist, wobei die Andruckrolle und ein Magnetkopf, an denen das Magnetband vorbeigeführt wird, an einer Kopfplatte angeordnet sind, die in einer Ruhe- oder Schnellaufstellung zurückgezogen gehalten ist und die in die Spielstellung vorgefahren wird, wobei die an einer schwenkbaren Halterung der Kopfplatte gelagerte Andruckrolle mit der Halterung gegen die Tonwelle verschwenkt wird.

Ein solches Magnetbandkassettengerät ist aus der DE-PS 33 12 136 bekannt. Das Laufwerk läßt sich mit Hilfe von drei Bedienungsstangen bedienen, von denen eine Stange eine Auswurffunktion und zwei Stangen Schnell-Lauffunktionen ausüben können. Die Bedienung der Bedienungsstangen erfolgt von Hand, kann jedoch auch automatisiert werden mit Hilfe eines Servomechanismus.

Es ist ein Lademechanismus vorgesehen, der einen Kassettenschacht aufweist, der in eine Spielposition absenkbar und in eine Ausnehmposition anhebbar ist. Das Absenken und Anheben erfolgt mit Hilfe einer Liftkulisse an einer Betätigungsstange. Die Steuerung des Anhebens und Absenkens erfolgt über einen Lifthebel, der mit einem Mitnehmer die Liftkulisse der Betätigungsstange abfährt.

Es ist eine Kopfplatte vorgesehen, an der ein Magnetkopf angeordnet ist, an dem das Magnetband vorbeiführbar ist. An der Kopfplatte sind mittels schwenkbarer Halterungen Andruckrollen gelagert, von denen bei einem für Reverse-Betrieb ausgebildeten Laufwerk immer nur jeweils eine gegen eine ihr zugeordnete Tonwelle andrückbar ist. Das Vor- und Zurückfahren der Kopfplatte bewirkt ein Stellmechanismus. Beim Vorfahren wird die jeweils gegen die zugeordnete Tonwelle anzulegende Andruckrolle mit ihrer Halterung in Richtung auf die Tonwelle gedrückt.

Beim schnellen Vor- und Rücklauf wird die Kopfplatte nur ein wenig aus ihrer Spielstellung zurückgezogen, wodurch ein gewisser Kontakt zwischen dem Magnetkopf und dem vorbeilaufenden Magnetband bestehen bleibt. Die vom Magnetkopf vom schnell vorbeilaufenden Magnetband aufgenommenen Signale kann der Verstärker als zirpende Geräusche verstärken, die den Benutzer evtl. stören.

Aus der DE-PS 27 13 267 ist es bekannt, bei einem Magnetband-Laufwerk einen Magnetkopf und eine Andruckrolle an einem schwenkbaren Magnetkopf-Trägerhebel anzuordnen, der mit einem Blattfederschalter ausgerüstet ist. Dieser Schalter kann von dem verschwenkenden Magnetkopf-Trägerhebel unter Zuhilfenahme eines Steuerhebels geschaltet werden, um dadurch das Laufwerk in Betrieb zu setzen.

Es ist Aufgabe der Erfindung, ein Magnetbandkassettengerät der eingangs erwähnten Art derart zu verbessern, daß die über den Magnetkopf von dem beim Schnellspulen schnell vorbeilaufenden Band empfangbaren Signale stummgeschaltet werden und eine Spurrichtungserkennung möglich wird.

Die gestellte Aufgabe ist erfindungsgemäß dadurch gelöst, daß an der Kopfplatte im Wirkbereich der Andruckrollenhalterungen Schalterelemente angeordnet sind, die von den Andruckrollenhalterungen bei ihrem Verschwenken infolge des Andrückens der Andruckrollen an die Tonwellen während des Laufwerksbetriebes in einen Schaltzustand versetzbar sind, in dem die Schalterelemente an dem Magnetkopf oder dem Vorverstärker des Laufwerkes eine Stummschaltung und oder eine Spurrichtungserkennung bewirken.

Die verschwenkenden Andruckrollenhalterungen können die Schalterelemente während des Laufwerkbetriebes derart verstellen, daß während des Bandschnellaufes der Tonkopf stumm, d. h. abgeschaltet ist und zirpende störende Geräusche nicht zur Verstärkerschaltung gelangen können. Damit sind störende Geräusche, die auch als Mickymaus-Effekt bekannt sind, absolut vermieden. Wenn die Stummschaltung unmittelbar an dem Magnetkopf erfolgt, dann kann sie mit Teilen des Laufwerkes vereint werden. Weiterhin ist damit eine Spurrichtungserkennung ohne zusätzlichen Schalter möglich.

Nach einer weiteren Ausgestaltung der Erfindung ist vorgesehen, daß die Schalterelemente in der Ruhestellung geschlossen und dort, wo eine Andruckrolle an einer Tonwelle anliegt, geöffnet sind. Eine derartige Schaltung erweist sich als vorteilhaft, weil die Stummschaltung zugleich eine Abschaltung ist und die Abschaltung nur dann benötigt wird, wenn eine Andruckrolle von der jeweils zugeordneten Tonwelle abgehoben ist.

Nach einer weiteren Ausgestaltung der Erfindung ist dazu vorgesehen, daß die als Blattfederschalter ausgebildeten Schalterelemente Kontaktfedersätze aufweisen, die zwischen der jeweiligen Andruckrollenhalterung und einem Anschlag an der Kopfplatte angeordnet sind, wobei die Kontaktfedersätze zwischen den Andruckrollenhalterungen je nach der Stellung der Halterungen zusammengedrückt oder auseinandergedrückt sind. Die Betätigung der Kontaktfedern ist dabei außerordentlich einfach und verlangt keinerlei zusätzliche Bauteile.

Nach einer weiteren Ausgestaltung der Erfindung ist vorgesehen, daß die Halterungen federbelastet bestrebt sind, die Andruckrollen von den ihnen zugeordneten Tonwellen wegzudrücken, wobei immer diejenige Halterung, deren Andruckrolle die zugeordnete Tonwelle nicht berührt, die Kontaktfedern zusammendrückt und diejenige Halterung, deren Andruckrolle gegen die zugeordnete Tonwelle drückt, die Kontaktfedern zum Auseinanderfedern freigibt.

Die Erfindung wird anhand der Zeichnungen näher erläutert. Es zeigen:

Fig. 1 das Laufwerk eines Magnetbandkassettengerätes mit einer Kopfplatte, die in Richtung einer Magnetbandkassette vorfahrbar und mit Schalterelementen zum Stummschalten versehen ist,

Fig. 2 und 3 zwei unterschiedliche Schwenkstellungen der vorgefahrenen Kopfplatte und dementsprechende Schaltzustände der Schalterelemente,

Fig. 4 eine Betätigungsstange des Laufwerkes mit Laschen für eine Schalterelementbetätigung.

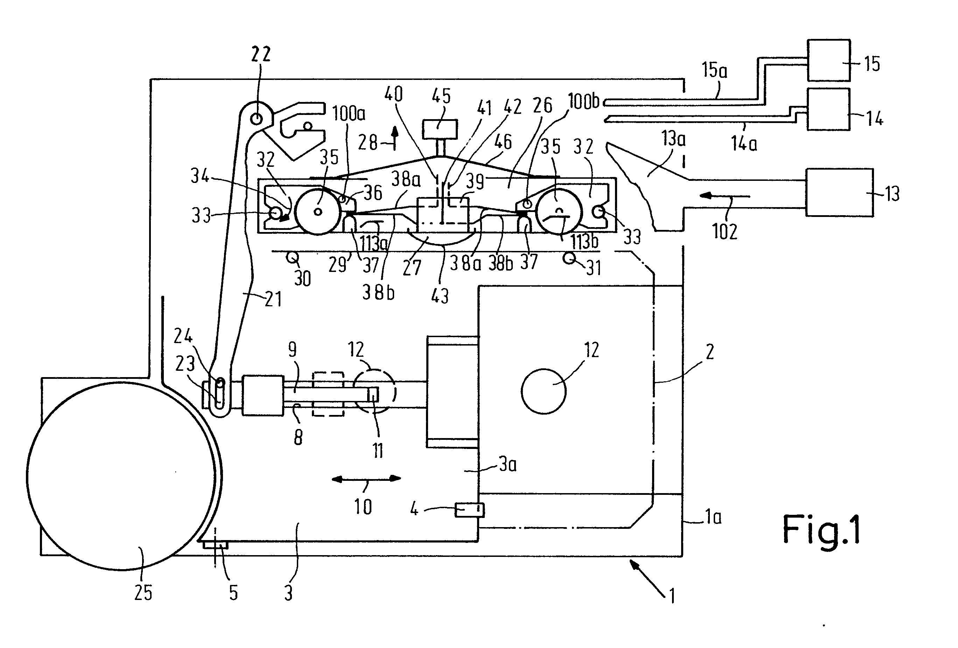

Das in Fig. 1 vereinfacht dargestellte Magnetbandkassettengerät 1 weist einen Kassettenschacht 1a auf, in den eine Kompakt-Kassette 2 eingeschoben ist. Der Kassettenschacht 1a ist senkrecht zur Zeichenebene absenkbar mit Hilfe eines Lifthebels 3, der mit seinem vorderen Ende 3a unter Überwurflaschen 4 des Kassettenschachtes 1 greift. Der Lifthebel 3 ist um eine Achse 5 verschwenkbar. In dem Lifthebel 3 befindet sich eine Schlitzführung 8, in der ein streifenförmiger Kassettenhalter 9 in Richtung eines Doppelpfeiles 10 verschieblich ist. Der Kassettenhalter 9 ist an seinem vorderen Ende 9a mit einer Nase 11 versehen, die in ein Wickelloch 12 der Kompakt-Kassette 2 eingefallen ist. Zum Durchführen der Laufwerksfunktionen sind eine Betätigungstaste 13 mit einer Betätigungsstange 13a und zwei Bedienungstasten 14, 15 mit zwei Bedienungsstangen 14a, 14b vorgesehen.

Weiterhin ist ein Betätigungshebel 21 vorhanden, der um eine Achse 22 verschwenkbar ist. Der Betätigungshebel 21 greift an seinem freien Ende mit einem Schlitz 23 über einen Zapfen 24 des Kassettenhalters 9. Die Nase 11 des Kassettenhalters 9 greift dabei in eine der Wickelbohrungen 12 der Kompakt-Kassette 2 ein. In der in Fig. 1 dargestellten Stellung des Betätigungshebels 21 ist der Kassettenschacht 1a abgesenkt in seine Spielposition. Das Magnetbandkassettengerät wird angetrieben von einem Motor 25.

Zu dem Magnetbandkassettengerät gehört eine Kopfplatte 26, auf der ein Magnetkopf 27 befestigt ist. Die Kopfplatte ist in der Darstellung nach Fig. 1 in Richtung eines Pfeiles 28 von der Kompakt-Kassette 2 weg zurückgezogen. Der Magnetkopf 27 hat dabei ein Magnetband 29, das innerhalb de Kompakt-Kassette 2 auf nicht dargestellte Wickel aufgewickelt ist, völlig freigegeben. Das Magnetband 29 läuft über Tonwellen 30 und 31 hinweg und ist zwischen den Tonwellen 30 und 31 geradlinig gespannt.

Auf der Kopfplatte 26 sind Halterungen 32 um Achsbolzen 33 verschwenkbar gelagert. Nicht dargestellte Federn verleihen den Halterungen 32 ein Drehmoment um die Achsbolzen 33 in Richtung eines Pfeiles 34 und schwenken die Halterungen 32 unbelastet auf das Magnetband 29 zu. An den Halterungen 32 sind Andruckrollen 35 drehbar gelagert.

Jede der Halterungen 32 weist einen Ansatz 36 auf, der in Richtung auf die Kopfplattenmitte weist. Den Ansätzen 36 liegen Anschläge 37 gegenüber, zwischen denen sich Federarme 38a, 38b eines Schalterelementes 39 befinden. Die Kontaktfederarme 38a, 38b federn unbelastet auseinander und werden zusammengedrückt, wenn der jeweilige Ansatz 36 mit seiner Halterung 32 in Richtung auf einen zugeordneten Anschlag 37 verstellt wird.

Die Kontaktfedern 38a, 38b sind mit Anschlüssen 40, 41, 42 versehen, die entsprechend ihrer Anschaltung im Gerät entweder am Magnetkopf oder an seinem Vorverstärker eine Stummschaltung bewirken können. Jeweils eine Kontaktfeder 38a ist dabei als Anschluß 40, 42 weitergeführt. Die beiden anderen Kontaktfedern 38b sind elektrisch verbunden und zum Kontakt 41 weitergeführt. Bei der Darstellung nach Fig. 1 mit in Richtung des Pfeiles 28 zurückgefahrener Kopfplatte sind beide Kontaktfederpaare 38a, 38b zusammengedrückt und haben dabei miteinander Kontakt. In dieser zusammengedrückten Stellung ist das Laufwerk stummgeschaltet.

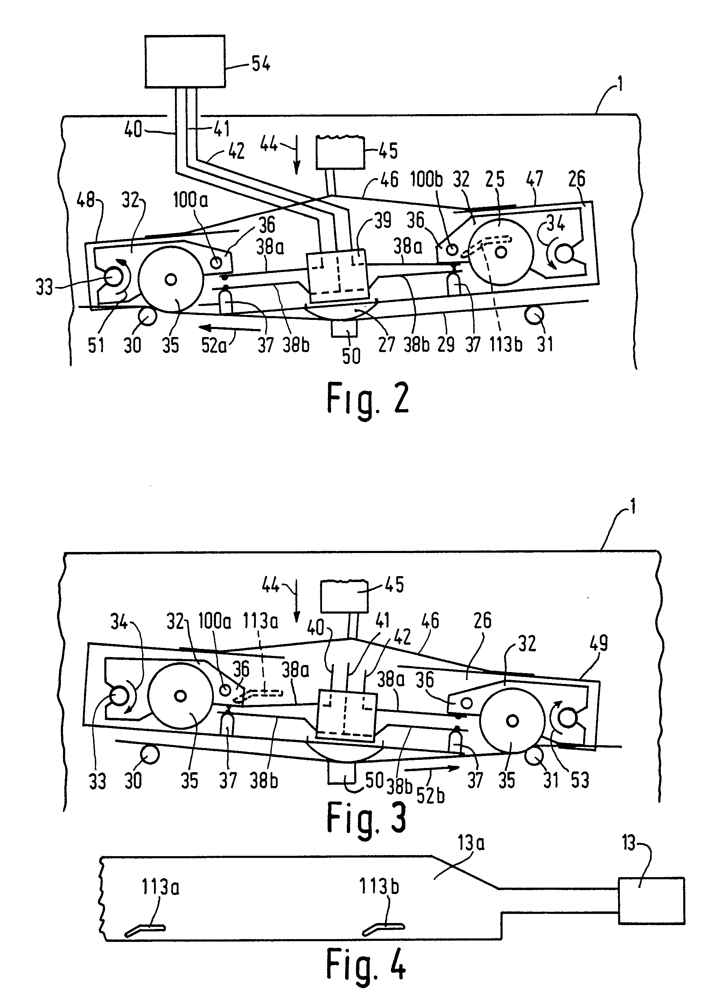

Die Stellung der Kopfplatte 26 nach Fig. 1 entspricht der Ruhestellung. Zwischen dieser Ruhestellung und den vorgefahrenen Spielstellungen, die in Fig. 2 und 3 dargestellt sind, gibt es noch eine Schnellspulstellung, in der die Kopfplatte nicht ganz zurückgefahren ist und in der der Kopfspiegel 43 des Magnetkopfes 27 das Magnetband 29 gerade leicht berührt. Auch für diese Stellung gilt die Stummschaltung, weil nämlich keine der Andruckrollen 35 eine der Tonwellen 30 oder 31 berührt.

Bei dem in der Zeichnung dargestellten Reverse-Laufwerk für ein Magnetbandkassettengerät kann in der einen Laufrichtung eine Andruckrolle 35 gegen die ihr zugeordnete Tonwelle 30 und in der anderen Laufrichtung die andere Andruckrolle 35 gegen die Tonwelle 31 gedrückt werden. Hierzu wird die Kopfplatte 26 in Richtung der Pfeile 44 nach den Fig. 2 und 3 in Richtung auf das Magnetband 29 geschoben. Das Vorschieben erfolgt mit Hilfe eines Schiebers 45, der auf eine Blattfeder 46 einwirkt, die wiederum gegen eine rückwärtige Kante 47 der Kopfplatte 26 drückt. Mit Hilfe von nicht näher dargestellten mechanischen Führungsmitteln kippt die Kopfplatte 26 bei wechselndem Vorfahren einmal mit ihrer linken Seite 48 und das andere Mal mit ihrer rechten Seite 49 nach vorn. Dadurch kommt beim linken Nach-vorn-Kippen die Andruck rolle 35 mit der Tonwelle 30 in Druckkontakt und beim Nach-vorn-Kippen der Seite 49 die Andruckrolle 35 an der Tonwelle 31 zum Anliegen. In beiden Fällen wird der Tonkopf gegen das Magnetband 29 gedrückt, und der Andruck wird erhöht durch einen bekannten Andruckfilz 50 der Kompakt-Kassette 2. Kippt die Kopfplatte 26 beim Vorfahren mit ihrer linken Seite 48 nach vorn, dann schwenkt beim Andrücken der Andruckrolle 35 gegen die Tonwelle 30 die linke Halterung 32 in Richtung eines Pfeiles 51 um den Achsbolzen 33. Dies hat zur Folge, daß sich der Ansatz 36 von dem Anschlag 37 trennt und die Kontaktfedern 38a und 38b aufgrund eigener Federwirkung auseinanderspreizen. Dabei geht der Kontakt zwischen den beiden Kontaktfedern 38a und 38b verloren. Das Öffnen der linken Kontaktseite des Schalterelementes 39 hat zur Folge, daß die Stummschaltung beendet wird und Tonkopf oder Vorverstärker zur Signalwiedergabe aktiviert werden. Das Gerät erkennt, daß die linke Andruckrolle 35 mit der ihr zugeordneten Tonwelle 30 in Kontakt ist und das Magnetband 29 nach links in Richtung des Pfeiles 52a an dem Magnetkopf 27 vorbei zieht.

Bei der Darstellung nach Fig. 2 bleibt die rechte Andruckrolle 35 auf Abstand von der Tonwelle 31. Die Federkraft in Richtung des Pfeiles 34 zieht den Ansatz 36 der rechten Halterung 32 weiter gegen den rechten Anschlag 37, und die rechten Kontaktfedern 38a und 38b halten ihren Kontakt aufrecht. Die Schaltung des Gerätes erkennt aufgrund der miteinander kontaktierenden rechten Kontaktfedern 38a, 38b, daß die rechte Andruckrolle 35 die Tonwelle 31 nicht berührt.

Zum Richtungswechsel des Bandlaufes wird die Kopfplatte 26 in Richtung des Pfeiles 28 nach Fig. 1 zurück- und wieder vorgefahren, wobei nunmehr die rechte Seite 49 der Kopfplatte 26 nach vorn kippt. Das führt dazu, daß nunmehr die rechte Andruckrolle 35 gegen die Tonwelle 31 drückt und das Band damit in Richtung eines Pfeiles 52 durchzieht, während die linke Andruckrolle 35 von der ihr zugeordneten Tonwelle 30 abgehoben ist. Das Andrücken der rechten Andruckrolle gegen die Tonwelle 31 hat zur Folge, daß die rechte Halterung 32 im Uhrzeigersinn in Richtung eines Pfeiles 53 verschwenkt, wobei sich der Ansatz 36 der rechten Halterung von dem zugeordneten Anschlag 37 trennt. Die Folge davon ist, daß über die Leitungen 41 und 42 an die Laufwerksschaltung das Kommando gegeben wird: Bandlauf in Richtung des Pfeiles 52b. Die auf die linke Halterung 32 in Richtung des Pfeiles 34 ausgeübte Federwirkung drückt den linken Ansatz 36 gegen den linken Anschlag 37, so daß die kontaktierenden linken Kontaktfedern 38a und 38b das Kommando geben: linke Andruckrolle 35 abgehoben. Über die Leitungen 40 und 41 geht daher an das Gerät das Signal: linke Seite abgehoben.

Mit Hilfe des Schalterelementes 39 und seiner Kontaktfederpaare 38a, 38b läßt sich damit bei zurückgezogenen Andruckrollen 35 an den Magnetkopf 27 oder den in Fig. 1 angedeuteten Vorverstärker 54 das Kommando zum Stummschalten geben. Ist eine der Andruckrollen 35 gegen eine der zugeordneten Tonwellen 30, 31 gedrückt, dann läßt sich davon das Richtungssignal des Magnetbandlaufes ableiten.

Weiterhin gibt es noch eine vierte Schaltstellung der Schaltelemente 39, in der beide Kontaktfederpaare 38a, 38b gleichzeitig geöffnet sind. Diese Offenstellung der beiden Kontaktfederpaare wird erreicht, wenn die Tastenstange 13a in Richtung eines Pfeiles 102 eingedrückt wird. Dadurch werden an der Tastenstange 13a befestigte Andrucklaschen 113a, 113b (Fig. 4) ebenfalls in Richtung des Pfeiles 102 bewegt. Diese Andrucklaschen 113a, 113b drücken über an den Halterungen 32 angeordnete Stifte 100a, 100b jeweils die Halterung 32, deren Druckrolle 35 in Abhängigkeit von der Bandlaufrichtung gerade nicht mit der Tonwelle 31 bzw. 32 in Berührung steht, von dem jeweiligen Anschlag 37 weg. Dadurch kann das entsprechende Schaltkontaktpaar 38a, 38b öffnen. Bei dem Reverse-Laufwerk sind dann beide Schaltkontaktpaare geöffnet. Diese Schaltstellung kann beispielsweise in der nachgeschalteten Geräte-Elektronik als Signal für den Motorstop ausgenutzt werden.

## Ansprüche

1. Magnetbandkassettengerät (1) mit einem zum Abspielen von Magnetbandkassetten (2) dienenden Laufwerk, das zum Abspielen des Magnetbandes (29) mit wenigstens einer antreibbaren Tonwelle (30 oder 31) und einer gegen diese drückbaren Andruckrolle (35) versehen ist, wobei die Andruckrolle (35) und ein Magnetkopf (27), an denen das Magnetband (29) vorbeigeführt wird, an einer Kopfplatte (26) angeordnet sind, die in einer Ruhe- oder Schnellaufstellung zurückgezogen gehalten ist und die in die Spielstellung vorgefahren wird, wobei die an einer schwenkbaren Halterung (32) der Kopfplatte (26) gelagerte Andruckrolle (35) mit der Halterung gegen die Tonwelle (30 oder 31) verschwenkt wird, dadurch gekennzeichnet, daß an der Kopfplatte (26) im Wirkbereich der Andruckrollenhalterungen (32) Schalterelemente (39) angeordnet sind, die von den Andruckrollenhalterungen (32) bei ihrem Verschwenken infolge des Andrückens der Andruckrollen an die Tonwellen während des Laufwerksbetriebes in einen Schaltzustand versetzbar sind, in dem die Schalterelemente (39) an dem Magnetkopf (27) oder dem Vorverstärker des Laufwerkes (1) eine Stummschaltung und/oder eine Spurrichtungserkennung bewirken.

2. Magnetbandkassettengerät nach Anspruch 1, dadurch gekennzeichnet, daß bei einem Reverse-Laufwerk mit zwei Andruckrollenhalterungen und zwei deren Andruckrollen zugeordneten Tonwellen jede Andruckrollenhalterung (32) mit einem Schalterelement (39) zusammenwirkt.

3. Magnetbandkassettengerät nach Anspruch 1 oder 2, dadurch gekennzeichnet, daß die Schalterelemente (39) in der Ruhestellung geschlossen und dort, wo eine Andruckrolle (35) an einer Tonwelle (30, 31) anliegt, geöffnet sind.

4. Magnetbandkassettengerät nach Anspruch 1,dadurch gekennzeichnet, daß die als Blattfederschalter ausgebildeten Schalterelemente (39) wenigstens zwei Kontaktfedersätze (38a, 38b) aufweisen, die zwischen der jeweiligen Andruckrollenhalterung (32) und einem Anschlag (37) an der Kopfplatte (26) angeordnet sind, wobei die Kontaktfedersätze (38a, 38b) zwischen den Andruckrollenhalterungen (32) je nach der Stellung der Halterungen (32) zusammengedrückt oder auseinandergefedert sind.

5. Magnetbandkassettengerät nach den Ansprüchen 1 oder 4, dadurch gekennzeichnet, daß die Halterungen (32) federbelastet bestrebt sind, die Andruckrollen von den ihnen zugeordneten Tonwellen (30, 31) wegzudrücken, wobei immer diejenige Halterung (32), deren Andruckrolle (35) die zugeordnete Tonwelle (30, 31) nicht berührt, die Kontaktfedern (38a, 38b) zusammendrückt und diejenige Halterung (32), deren Andruckrolle (35) gegen die zugeordnete Tonwelle (30, 31) drückt, die Kontaktfedern (38a, 38b) zum Auseinanderfedern freigibt.

Fig.1

EP 0 353 815 A2

Fig. 2

Fig. 3

Fig. 4

2 - II - PHD 88-155